(19) Europäisches Patentamt
European Patent Office
Office européen des brevets

(11) Veröffentlichungsnummer: **0 439 777 B1**

# (12) EUROPÄISCHE PATENTSCHRIFT

(45) Veröffentlichungstag der Patentschrift: **07.09.94**

(51) Int. Cl.5: **C08G 77/14**, C08G 77/38, C09D 183/06, C08J 3/28, C08L 83/06, C08G 77/48

(21) Anmeldenummer: **90124495.4**

(22) Anmeldetag: **18.12.90**

## (54) Alkenyloxygruppen aufweisende Siloxancopolymere, deren Herstellung und Verwendung.

(30) Priorität: **01.02.90 DE 4002922**

(43) Veröffentlichungstag der Anmeldung:
**07.08.91 Patentblatt 91/32**

(45) Bekanntmachung des Hinweises auf die Patenterteilung:
**07.09.94 Patentblatt 94/36**

(84) Benannte Vertragsstaaten:
**AT BE CH DE ES FR GB IT LI NL SE**

(56) Entgegenhaltungen:
**EP-A- 0 247 501**
**EP-A- 0 262 806**
**EP-A- 0 266 895**
**EP-A- 0 278 618**
**US-A- 2 983 745**
**US-A- 3 197 432**
**US-A- 4 208 319**

**EUROPEAN POLYMER JOURNAL Band 9, 1973, Seiten 1165-1171, Oxford, GB; J.-E. HERZ et al.: "Préparation et caractérisation dereticulats-modèle de polydiméthylsiloxanes"**

(73) Patentinhaber: **WACKER-CHEMIE GMBH**
**Hanns-Seidel-Platz 4**
**D-81737 München (DE)**

(72) Erfinder: **Herzig, Christian, Dr.**
**Schröckenbauer 1**
**W-8221 Taching (DE)**
Erfinder: **Gilch, Doris**
**Axöder Ring 104**
**W-8330 Eggenfelden (DE)**

**EP 0 439 777 B1**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft Alkenyloxygruppen aufweisende Siloxancopolymere sowie ein Verfahren zu deren Herstellung. Weiterhin betrifft die Erfindung die Verwendung der Alkenyloxygruppen aufweisenden Siloxancopolymere in durch Licht vernetzbaren Zusammensetzungen.

Aus US-A 4 617 238 (ausgegeben 14. Oktober 1986, J.V. Crivello et al., General Electric Company) sind Organopolysiloxane bekannt, die je Molekül mindestens eine Si-gebundene vinyloxyfunktionelle Gruppe der Formel

$H_2C=CH\text{-}O\text{-}G\text{-}$

enthalten, wobei G ein Alkylenrest ist oder einen Alkylenrest bedeutet, der mindestens durch ein zweiwertiges Heteroatom oder eine Kombination von Heteroatomen unterbrochen ist. In US-A 4 617 238 sind durch Licht vernetzbare Zusammensetzungen beschrieben, die die vorstehend genannten Organopolysiloxane enthalten, sowie Oniumsalze, die die kationische Polymerisation dieser Organopolysiloxane katalysieren.

In US-A 4 208 319 (ausgegeben 18. Juni 1980, P. August et al., Wacker-Chemie GmbH) ist die Umsetzung von vier aliphatische Doppelbindungen enthaltende organische Verbindung, wie z. B. Tetraallyloxyethan, mit einem Silan mit Si-gebundenem Wasserstoff in Gegenwart von die Anlagerung von Si-gebundenem Wasserstoffatom an aliphatische Doppelbindung förderndem Katalysator beschrieben. Bei dieser Umsetzung werden praktisch 100 % d. Th. betragende Ausbeuten an 3 aliphatische Doppelbindungen enthaltendem Organosilan erhalten. Die so erhaltenen Organosilane werden als Verstärkungsadditive in durch Schwefel oder Radikale vernetzbare Massen auf Grundlage von organischen Polymeren und Füllstoffen verwendet.

Es bestand die Aufgabe, Alkenyloxygruppen aufweisende Siloxancopolymere bereitzustellen, die in einem einfachen Verfahren herstellbar sind, wobei das Verfahren es erlaubt, an einem Siliziumatom mehr als eine Alkenyloxygruppe einzuführen. Weiterhin bestand die Aufgabe Alkenyloxygruppen aufweisende Siloxancopolymere bereitzustellen, welche bei Einwirkung von Licht, insbesondere von Ultraviolettlicht, unter kationischer Polymerisation besonders rasch vernetzen. Diese Aufgabe wird durch die Erfindung gelöst.

Gegenstand der Erfindung sind
Alkenyloxygruppen aufweisende Siloxancopolymere enthaltend
(a) Siloxaneinheiten der Formel

$$R_aSi(OR^1)_bO_{\frac{4-(a+b)}{2}} \qquad (I),$$

wobei R gleiche oder verschiedene, gegebenfalls halogenierte Kohlenwasserstoffreste mit 1 bis 18 Kohlenstoffatom(en) je Rest,
$R^1$ gleiche oder verschiedene Alkylreste mit 1 bis 4 Kohlenstoffatom(en) je Rest, die durch ein Ethersauerstoffatom substituiert sein können, bedeutet,
a 0, 1, 2 oder 3,
b 0, 1, 2 oder 3
und die Summe a + b nicht größer als 3 ist,
(b) je Molekül mindestens eine Siloxaneinheit der Formel

$$QR_cSiO_{\frac{4-(c+1)}{2}} \qquad (II),$$

wobei R die oben dafür angegebene Bedeutung hat,
c 0, 1 oder 2 ist,
Q einen Rest der Formel

$$-CH_2CHR^2CHR^2OY(OCR^2=CR^2CH_3)_{x-1}$$

bedeutet,
wobei $R^2$ gleich oder verschieden ist, ein Wasserstoffatom oder einen Methylrest bedeutet,

Y einen dreiwertigen, vierwertigen, fünfwertigen oder sechswertigen Kohlenwasserstoffrest mit 2 bis 20 Kohlenstoffatomen je Rest bedeutet,

der durch Gruppen der Formel

- OH
- $OR^3$ (wobei $R^3$ einen Alkylrest mit 1 bis 6 Kohlenstoffatom(en) je Rest bedeutet)
- $OSiR^4_3$ (wobei $R^4$ einen Methyl-, Ethyl-, Isopropyl-, tert.-Butyl- oder Phenylrest bedeutet)
- 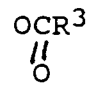

(wobei $R^3$ die oben dafür angegebene Bedeutung hat) oder

- X (wobei X ein Halogenatom bedeutet) substituiert sein kann,

oder durch mindestens ein Sauerstoffatom, Schwefelatom oder eine Carbonylgruppe unterbrochen sein kann, oder einen dreiwertigen Rest der Formel

≡P, ≡P = O oder $\equiv SiR^5$

bedeutet, wobei $R^5$ einen einwertigen Kohlenwasserstoffrest mit 1 bis 8 Kohlenstoffatom(en) je Rest bedeutet,
oder ein vierwertiges Element, wie

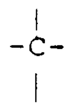 , 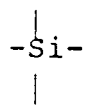 oder 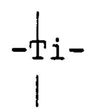

bedeutet und

x 3, 4, 5 oder 6 ist,

und gegebenenfalls
(c) je Molekül mindestens eine Einheit ausgewählt aus der Gruppe von Einheiten der Formel

$$O_{\frac{4-(c+1)}{2}}R_cSi-Q^1-SiR_cO_{\frac{4-(c+1)}{2}} \qquad (III),$$

$$\begin{array}{l} O_{\frac{4-(c+1)}{2}}R_cSi-Q^2-SiR_cO_{\frac{4-(c+1)}{2}} \\ \qquad\qquad\qquad\quad | \\ \qquad\qquad\qquad\quad SiR_cO_{\frac{4-(c+1)}{2}} \end{array} \qquad (IV), \text{ und}$$

$$\begin{array}{l} \qquad\qquad\qquad\quad SiR_cO_{\frac{4-(c+1)}{2}} \\ \qquad\qquad\qquad\quad | \\ O_{\frac{4-(c+1)}{2}}R_cSi-Q^3-SiR_cO_{\frac{4-(c+1)}{2}} \\ \qquad\qquad\qquad\quad | \\ \qquad\qquad\qquad\quad SiR_cO_{\frac{4-(c+1)}{2}} \end{array} \qquad (V),$$

wobei R und c die oben dafür angegebene Bedeutung haben,

$Q^1$ einen Rest der Formel

$$\begin{array}{c} (OCR^2{=}CR^2CH_3)_{x-2} \\ | \\ -CH_2CHR^2CHR^2O-Y-OCHR^2CHR^2CH_2- \end{array}$$

$Q^2$ einen Rest der Formel

$$\begin{array}{c} (OCR^2{=}CR^2CH_3)_{x-3} \\ | \\ -CH_2CHR^2CHR^2O-Y-OCHR^2CHR^2CH_2- \\ | \\ OCHR^2CHR^2CH_2- \end{array} \qquad \text{und}$$

$Q^3$ einen Rest der Formel

$$\begin{array}{c} (OCR^2{=}CR^2CH_3)_{x-4} \\ | \\ -CH_2CHR^2CHR^2O-Y-OCHR^2CHR^2CH_2- \\ | \\ (OCHR^2CHR^2CH_2-)_2 \end{array}, \qquad (x-4 \geq 0)$$

wobei $R^2$, Y und x die oben dafür angegebene Bedeutung haben, bedeutet.

Vorzugsweise enthalten die Alkenyloxygruppen aufweisenden Siloxancopolymere Siloxaneinheiten der Formel (I), je Molekül mindestens eine siloxaneinheit der Formel (II) und je Molekül mindestens eine Einheit ausgewählt aus der Gruppe der Einheiten der Formel (III), (IV) und (V).

Gegenstand der Erfindung ist weiterhin ein Verfahren zur Herstellung der Alkenyloxygruppen aufweisenden Siloxancopolymere, dadurch gekennzeichnet, daß

in einer 1. Stufe

eine mehr als zwei aliphatische Doppelbindungen aufweisende organische Verbindung (1) der allgemeinen Formel

$Y(OCHR^2CR^2=CH_2)_x$ ,

wobei $R^2$, Y und x die oben dafür angegebene Bedeutung haben,
mit einem Organopolysiloxan (2) mit mindestens einem Si-gebundenen Wasserstoffatom je Molekül in Gegenwart von einem die Anlagerung von Si-gebundenem Wasserstoff an eine aliphatische Doppelbindung fördernden Katalysator (3) umgesetzt wird, wobei das eingesetzte Verhältnis von aliphatische Doppelbindung in organischer Verbindung (1) zu Si-gebundenem Wasserstoff im Organopolysiloxan (2) ein solches ist, daß Alkenylgruppen aufweisende Siloxancopolymere mit durchschnittlich mehr als zwei Alkenylgruppen A der Formel

$-OCHR^2CR^2=CH_2$ ,

wobei $R^2$ die oben dafür angegebene Bedeutung hat, erhalten werden und dann
in einer 2. Stufe
die Doppelbindung in den Alkenylgruppen A zu dem dem Ethersauerstoffatom benachbarten Kohlenstoffatom umgelagert wird durch Erhitzen des in der 1. Stufe gewonnenen Alkenylgruppen aufweisenden Siloxancopolymeren in Gegenwart eines eine solche Umlagerung der Doppelbindung fördernden Katalysators (4), wobei Alkenyloxygruppen aufweisende Siloxancopolymere mit durchschnittlich mehr als zwei Alkenyloxygruppen B der Formel

$-OCR^2=CR^2CH_3$ ,

wobei $R^2$ die oben dafür angegebene Bedeutung hat, erhalten werden.

Vorzugsweise ist x 3 oder 4 und Y ein dreiwertiger oder vierwertiger Rest.

Die erfindungsgemäßen Alkenyloxygruppen aufweisenden Organopolysiloxane besitzen vorzugsweise eine Viskosität von 5 bis $5 \cdot 10^5$ mPa•s bei 25 °C, bevorzugt 50 bis 50 000 mPa•s bei 25 °C.

Beispiele für Reste R sind Alkylreste, wie der Methyl-, Ethyl-, n- Propyl-, iso-Propyl-, 1-n-Butyl-, 2-n-Butyl-, iso-Butyl-, tert.-Butyl-, n-Pentyl-, iso-Pentyl-, neo-Pentyl, tert.-Pentylrest, Hexylreste, wie der n-Hexylrest, Heptylreste, wie der n-Heptylrest, Octylreste, wie der n-Octylrest und iso-Octylreste, wie der 2,2,4-Trimethylpentylrest, Nonylreste, wie der n-Nonylrest, Decylreste, wie der n-Decylrest, Dodecylreste, wie der n-Dodecylrest, Octadecylreste, wie der n-Octadecylrest; Cycloalkylreste, wie Cyclopentyl-, Cyclohexyl-, Cycloheptylreste und Methylcyclohexylreste; Arylreste, wie der Phenyl-, Naphthyl-, Anthryl- und Phenanthrylrest; Alkarylreste, wie o-, m-, p-Tolylreste, Xylylreste und Ethylphenylreste; und Aralkylreste, wie der Benzylrest, der $\alpha$- und der $\beta$-Phenylethylrest. Bevorzugt ist der Methylrest.

Beispiele für halogenierte Reste R sind Halogenalkylreste, wie der 3,3,3-Trifluor-n-propylrest, der 2,2,2,2',2',2'-Hexafluorisopropylrest, der Heptafluorisopropylrest, und Halogenarylreste, wie der o-, m-, und p-Chlorphenylrest.

Beispiele für Alkylreste $R^1$ sind der Methyl-, Ethyl-, n-Propyl-, iso-Propyl-, 1-n-Butyl-, 2-n-Butyl-, iso-Butyl-, und tert.-Butylrest. Bevorzugt sind der Methyl- und Ethylrest. Beispiele für Alkylreste $R^1$, die durch ein Ethersauerstoffatom substituiert sind, sind der Methoxyethylen- und Ethoxyethylenrest.

Bevorzugt ist der Rest $R^2$ ein Wasserstoffatom.

Beispiele für Alkylreste $R^3$ sind der Methyl-, Ethyl-, n-Propyl-, iso-Propyl-, 1-n-Butyl-, 2-n-Butyl-, iso-Butyl-, tert.-Butyl-, n-Pentyl-, iso-Pentyl-, neo-Pentyl, tert.-Pentylrest und Hexylreste, wie der n-Hexylrest.

Beispiele für Reste $R^5$ sind Alkylreste, wie der Methyl-, Ethyl-, n-Propyl-, iso-Propyl-, 1-n-Butyl-, 2-n-Butyl-, iso-Butyl-, tert.-Butyl-, n-Pentyl-, iso-Pentyl-, neo-Pentyl, tert.-Pentylrest, Hexylreste, wie der n-Hexylrest, Heptylreste, wie der n-Heptylrest, Octylreste, wie der n-Octylrest und iso-Octylreste, wie der 2,2,4-Trimethylpentylrest, Alkenylreste, wie der Vinyl- und der Allylrest; Cycloalkylreste, wie Cyclopentyl-, Cyclohexyl-, Cycloheptylreste und Methylcyclohexylreste; Arylreste, wie der Phenylrest; Alkarylreste, wie o-, m-, p-Tolylreste, Xylylreste und Ethylphenylreste; und Aralkylreste, wie der Benzylrest, der $\alpha$- und der $\beta$-Phenylethylrest.

Bevorzugt als Alkenyloxygruppen aufweisende Siloxancopolymere sind solche, die
(a) Siloxaneinheiten der Formel

$R_2SiO$ (I')

(b) je Molekül mindestens zwei Siloxaneinheiten der Formel

$QR_2SiO_{1/2}$ (II') und

(c) je Molekül mindestens eine Einheit der Formel

$O_{1/2}R_2SiQ^1SiR_2O_{1/2}$ (III'),

wobei R, Q und $Q^1$ die oben dafür angegebene Bedeutung haben, enthalten.

Beispiele für mehr als zwei aliphatische Doppelbindungen aufweisende organische Verbindung (1), die in der 1. Stufe des erfindungsgemäßen Verfahrens eingesetzt wird, sind solche der Formel

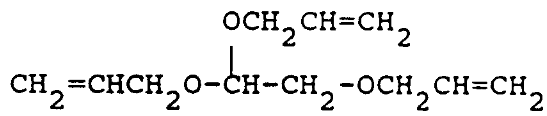

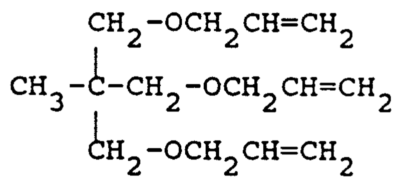

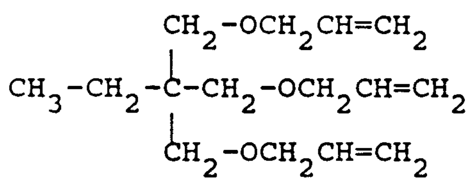

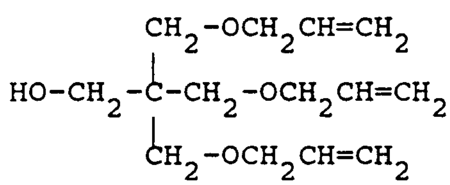

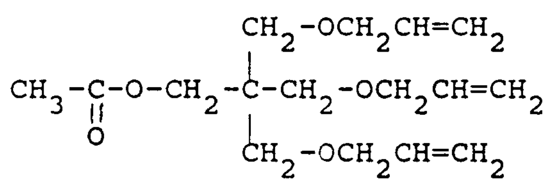

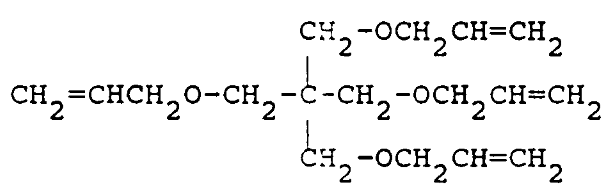

$(CH_2=CHCH_2O)_2CHCH(OCH_2CH=CH_2)_2$

$(CH_2=CHCH_2O)_2CHCH_2CH(OCH_2CH=CH_2)_2$

$CH_3C(OCH_2CH=CH_2)_3$

$C(OCH_2CH=CH_2)_4$

$(CH_2=CHCH_2O)CH_2[CH(OCH_2CH=CH_2)]_3CH_2(OCH_2CH=CH_2)$
$(CH_2=CHCH_2O)CH_2[CH(OCH_2CH=CH_2)]_4CH_2(OCH_2CH=CH_2)$
$Si(OCH_2CH=CH_2)_4$
$Si[OCH(CH_3)CH=CH_2]_4$
$P(OCH_2CH=CH_2)_3$ ,
$O=P(OCH_2CH=CH_2)_3$

und

$(R^6O\text{-}CH_2\text{-})_{4-k}C(\text{-}CH_2\text{-}OCH_2CH=CH_2)_k$

($R^6$ bedeutet Wasserstoff oder einen Rest der Formel

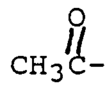

und k ist durchschnittlich 2,5 bis 3,5, bevorzugt 2,9), wobei die letztgenannte Verbindung ein bevorzugtes Beispiel ist.

Beispiele für den Rest Y sind daher solche der Formel

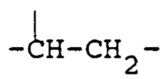

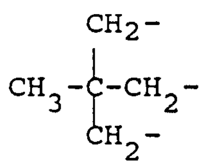

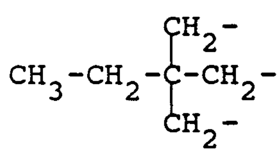

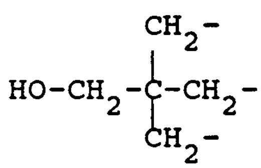

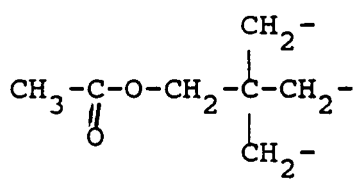

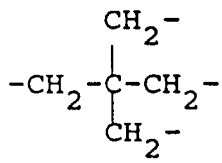

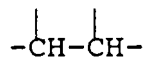

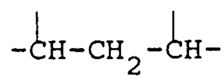

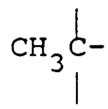

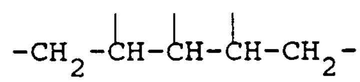

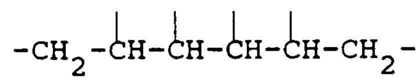

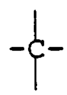

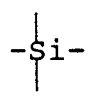

≡P und ≡P = O .

Verfahren zur Herstellung von organische Verbindung (1) sind in EP-B 46 731 (veröffentlicht 3. Oktober 1984, F. Lohse et al., Ciba-Geigy AG) beschrieben. Die Verbindung der Formel

$(HOCH_2)_{4-k}C(CH_2OCH_2CH=CH_2)_k$

wobei k 2,9 ist, ist beispielsweise bei der Fa. Shell AG käuflich erwerblich und wird als Pentaerythrittriallylether vertrieben. Die Verbindung der Formel

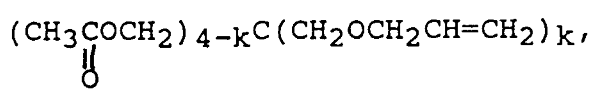

wobei k durchschnittlich 2,5 bis 3,5, bevorzugt 2,9 ist, wird durch Umsetzung der vorstehend genannten Verbindung mit Acetanhydrid oder Isopropenylacetat gewonnen.

Vorzugsweise werden in der 1. Stufe des erfindungsgemäßen Verfahrens als Organopolysiloxane (2) mit mindestens einem Si-gebundenen Wasserstoffatom solche der allgemeinen Formel

$$H_eR_fSiO_{\frac{4-(e+f)}{2}} \qquad (VI),$$

wobei R die oben dafür angegebene Bedeutung hat,

e 0 oder 1, durchnittlich 0,005 bis 1,0,

f 0, 1, 2 oder 3, durchschnittlich 1,0 bis 2,0 und die Summe e + f nicht größer als 3 ist,

bei dem erfindungsgemäßen Verfahren eingesetzt.

Bevorzugt werden als Organopolysiloxane (2) mit mindestens einem Si-gebundenen Wasserstoffatom solche der allgemeinen Formel

$H_dR_{3-d}SiO(SiR_2O)_o(SiRHO)_pSiR_{3-d}H_d$ (VII),

wobei R die oben dafür angegebene Bedeutung hat,

d 0 oder 1,

o 0 oder eine ganze Zahl von 1 bis 1000 und

p 0 oder eine ganze Zahl von 1 bis 6 bedeutet,

bei dem erfindungsgemäßen Verfahren eingesetzt.

Besonders bevorzugt enthalten die bei dem erfindungsgemäßen Verfahren eingesetzten Organopolysiloxane (2) durchschnittlich 2 bis 6 Si-gebundene Wasserstoffatome.

Die Organopolysiloxane (2) mit mindestens einem Si-gebundenen Wasserstoffatom je Molekül besitzen vorzugsweise eine Viskosität von 0,5 bis 20 000 mPa•s bei 25 °C, bevorzugt 5 bis 1000 mPa•s bei 25 °C.

Beispiele für Organopolysiloxane (2) sind Mischpolymerisate aus Dimethylhydrogensiloxan- und Dimethylsiloxaneinheiten, Mischpolymerisate aus Dimethylhydrogensiloxan-, Dimethylsiloxan- und Methylhydrogensiloxaneinheiten, Mischpolymerisate aus Trimethylsiloxan- und Methylhydrogensiloxaneinheiten, Mischpolymerisate aus Trimethylsiloxan-, Dimethylsiloxan- und Methylhydrogensiloxaneinheiten, Mischpolymerisate aus Dimethylhydrogensiloxan-, Dimethylsiloxan- und Phenylmethylsiloxaneinheiten, Mischpolymerisate aus Dimethylhydrogensiloxan- und Methylsiloxaneinheiten und Mischpolymerisate aus Dimethylhydrogensiloxan- und Phenylsiloxaneinheiten, Mischpolymerisate aus Methylhydrogensiloxan-und Diphenylsiloxaneinheiten, Mischpolymerisate aus Methylhydrogensiloxan-, Dimethylsiloxan- und Phenylsiloxaneinheiten und Mischpolymerisate aus Dimethylhydrogensiloxan-, Dimethylsiloxan- und Phenylsiloxaneinheiten.

Verfahren zum Herstellen von Organopolysiloxanen mit mindestens einem Si-gebundenen Wasserstoffatom je Molekül, auch von solchen der bevorzugten Art, sind allgemein bekannt.

Organische Verbindung (1) wird bei dem erfindungsgemäßen Verfahren in solchen Mengen eingesetzt, daß aliphatische Doppelbindung in organischer Verbindung (1) zu Si-gebundenem Wasserstoff in Organopolysiloxan (2) im Verhältnis von vorzugsweise 1,5 : 1 bis 20 : 1 , bevorzugt 2 : 1 bis 10 : 1 , vorliegt. Organische Verbindung (1) kann mit Organopolysiloxan (2) in Abhängigkeit ihrer Funktionalität und ihres Molekulargewichtes annähernd beliebig in sehr weiten Grenzen kombiniert werden. Ein Verhältnis C = C : SiH von größer als 20 : 1 führt aber ausschließlich zur Monohydrosilylierung der organischen Verbindung (1), was nicht bevorzugt ist.

Als die Anlagerung von Si-gebundenem Wasserstoff an aliphatische Mehrfachbindung fördernde Katalysatoren (3) können auch in der 1. Stufe des erfindungsgemäßen Verfahrens die gleichen Katalysatoren eingesetzt werden, die auch bisher zur Förderung der Anlagerung von Si-gebundenen Wasserstoff an aliphatische Doppelbindung eingesetzt werden konnten. Bei den Katalysatoren (3) handelt es sich vorzugsweise um ein Metall aus der Gruppe der Platinmetalle oder um eine Verbindung oder einen Komplex aus der Gruppe der platinmetalle. Beispiele für solche Katalysatoren sind metallisches und feinverteiltes Platin, das sich auf Trägern, wie Siliciumdioxyd, Aluminiumoxyd oder Aktivkohle befinden kann, Verbindungen oder Komplexe von Platin, wie Platinhalogenide, z.B. $PtCl_4$, $H_2PtCl_6{*}6H_2O$, $Na_2PtCl_4{*}4H_2O$, Platin-Olefin-Komplexe, Platin-Alkohol-Komplexe, Platin-Alkoholat-Komplexe, Platin-Ether-Komplexe, Platin-Aldehyd-Komplexe, Platin-Keton-Komplexe, einschließlich Umsetzungsprodukten aus $H_2PtCl_6{*}6H_2O$ und Cyclohexanon, Platin-Vinylsiloxankomplexe, wie Platin-1,3-Divinyl-1,1,3,3-tetramethyldisiloxankomplexe mit oder ohne Gehalt an nachweisbarem anorganisch gebundenem Halogen, Bis-(gamma-picolin)-platindichlorid, Trimethylendipyridinplatindichlorid, Dicyclopentadienplatindichlorid, Dimethylsulfoxydethylenplatin-(II)-dichlorid sowie Umsetzungsprodukte von Platintetrachlorid mit Olefin und primärem Amin oder sekundärem Amin oder primärem und sekundärem Amin gemäß US-A 4 292 434, wie das Umsetzungsprodukt aus in 1-Octen gelöstem Platintetrachlorid mit sec.-Butylamin, oder Ammonium-Platinkomplexe gemäß EP-B 110 370.

Der Katalysator (3) wird vorzugsweise in Mengen von 0,5 bis 1000 Gew.-ppm (Gewichtsteilen je Million Gewichtsteilen), bevorzugt in Mengen von 2 bis 100 Gew.-ppm, jeweils berechnet als elementares Platin und bezogen auf das Gesamtgewicht von organische Verbindung (1) und Organopolysiloxan (2), eingesetzt.

Die Additionsreaktion (oder Hydrosilylierungsreaktion) in der 1. Stufe des erfindungsgemäßen Verfahrens wird vorzugsweise beim Druck der umgebenden Atmosphäre, also etwa bei 1020 hPa (abs.), durchgeführt, sie kann aber auch bei höheren oder niedrigeren Drücken durchgeführt werden. Ferner wird die Hydrosilylierung vorzugsweise bei einer Temperatur von 50 °C bis 150 °C, bevorzugt 80 °C bis 130 °C durchgeführt.

In der 1. Stufe des erfindungsgemäßen Verfahrens können inerte, organische Lösungsmittel mitverwendet werden, obwohl die Mitverwendung von inerten, organischen Lösungsmittel nicht bevorzugt ist. Beispiele für inerte, organische Lösungsmittel sind Toluol, Xylol, Octanisomere, Butylacetat, 1,2-Dimethoxyethan, Tetrahydrofuran und Cyclohexan.

Von den in der 1.Stufe des erfindungsgemäßen Verfahrens hergestellten Alkenylgruppen aufweisenden Siloxancopolymeren wird vorzugsweise überschüssige organische Verbindung (1) sowie gegebenenfalls mitverwendetes inertes organisches Lösungsmittel destillativ entfernt.

Die in der 1. Stufe des erfindungsgemäßen Verfahrens gewonnenen Alkenylgruppen aufweisendenen Siloxancopolymere sind in der EP-A 0 439 778 beschrieben.

In der 2. Stufe des erfindungsgemäßen Verfahrens wird die Doppelbindung in den Alkenylgruppen A der Formel

$$-OCHR^2CR^2=CH_2$$

umgelagert zu dem dem Ethersauerstoffatom benachbarten Kohlenstoffatom in Gegenwart von diese Doppelbindungsumlagerung fördernde Katalysatoren (4).

In der 2. Stufe des erfindungsgemäßen Verfahrens können die gleichen Katalysatoren (4) eingesetzt werden die auch bisher zur Förderung einer solchen Umlagerung der Doppelbindung eingesetzt werden konnten. Beispiele für Katalysatoren (4) sind metallisches oder feinverteiltes Platin, Ruthenium, Rhodium und Palladium, wobei sich diese Metalle jeweils auf Trägern wie Aktivkohle befinden können, und Verbindungen oder Komplexe dieser Elemente, die in dem in der 1. Stufe des erfindungsgemäßen Verfahrens gewonnenen Alkenylgruppen aufweisendenem Siloxancopolymeren löslich sind oder an Trägern wie Aktivkohle oder polymere Phosphinliganden fixiert sind. Beispiele für bevorzugte Katalysatoren (4) sind solche der Formel $RuCl_2(PPh_3)_3$, $RuHCl(PPh_3)_3$, $RuHCl(CO)(PPh_3)_3$, $RuH_2(CO)(PPh_3)_3$ und $RuH_2(PPh_3)4$.

Der Katalysator (4) wird vorzugsweise in Mengen von 0,1 bis 1000 Gew.-ppm, bevorzugt 5 bis 100 Gew.-ppm, jeweils berechnet als elementares Metall und bezogen auf das Gesamtgewicht von organische Verbindung (1) und Organopolysiloxan (2), eingesetzt.

Als Katalysatoren (4) können auch starke Basen, wie Kaliumtert.-butylat, verwendet werden, doch sind diese aufgrund der hohen Einsatzmengen nicht bevorzugt. Umlagerung von Doppelbindungen mit diesen starken Basen sind in C. C. Price, JACS 83, 1772 (1961) und G. Kesslin, J. Org. Chem. 31, 2682 (1966) beschrieben.

Zur Umlagerung der Doppelbindung zu dem dem Ethersauerstoffatom benachbarten Kohlenstoffatom in den Alkenylgruppen A wird das aus der 1. Stufe des erfindungsgemäßen Verfahrens gewonnene Alkenylgruppen aufweisende Siloxancopolymer mit dem Katalysator (4) vermischt und die Mischung erhitzt. Die Umsetzung wird vorzugsweise bei einer Temperatur von 80 bis 200 °C, bevorzugt von 120 bis 150 °C, vorzugsweise beim Druck der umgebenden Atmosphäre, als etwa bei 1020 hPa (abs.), und vorzugsweise in einer Zeit von 0,5 bis 20 Stunden, bevorzugt 4 bis 10 Stunden, durchgeführt. Vorzugsweise wird kein Lösungsmittel mitverwendet.

Wird in der 1. Stufe des erfindungsgemäßen Verfahrens die organische Verbindung (1) nicht destillativ entfernt, lagern sich auch die Alkenylgruppen A in der organischen Verbindung (1) in Alkenyloxygruppen B um. Von den in der 2. Stufe des erfindungsgemäßen Verfahrens hergestellten Alkenyloxygruppen aufweisenden Siloxancopolymeren kann die umgelagerte organische Verbindung (1) destillativ entfernt werden. Wird sie nicht entfernt, ist sie aufgrund ihres Gehaltes an Alkenyloxygruppen B zur kationischen Polymerisation oder Copolymerisation mit den Alkenyloxygruppen des Siloxancopolymeren befähigt.

Das in der 2. Stufe des erfindungsgemäßen Verfahrens erhaltene Alkenyloxygruppen aufweisende Siloxancopolymer ist ein cis-/trans-Isomerengemisch in Bezug auf die Alkenyloxygruppen, wobei das cis-Isomere meistens überwiegt. Beispielsweise wenn die Alkenyloxygruppe ein 1-Propenyloxypropylrest ist, so liegt folgendes Isomerengemisch vor:

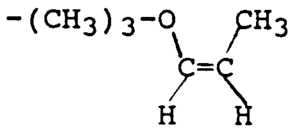

cis-

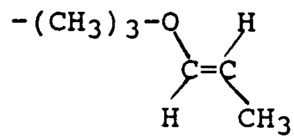

trans-

Das erfindungsgemäße 2-Stufen-Verfahren läuft nach folgendem Reaktionsschema ab beispielhaft dargestellt durch Einsatz von Pentaerythrittriallyletheracetat als organische Verbindung (1) und einem α,ω-Dihydrogendimethylpolysiloxan als Organopolysiloxan (2):

$$CH_3CO_2CH_2C(CH_2OCH_2CH{=}CH_2)_3 \quad + \quad H(SiMe_2O)_{50}SiMe_2H \quad \xrightarrow{\text{Pt-Kat.}}$$

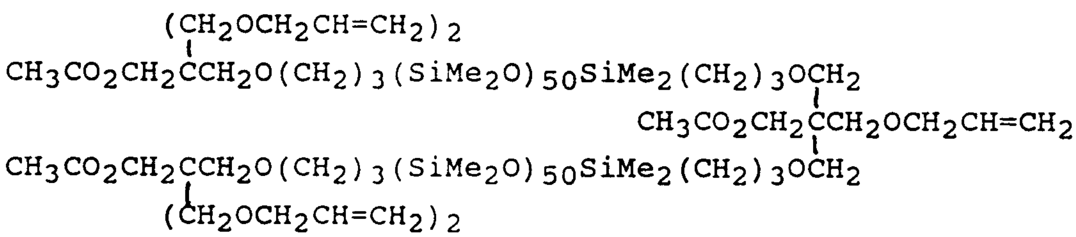


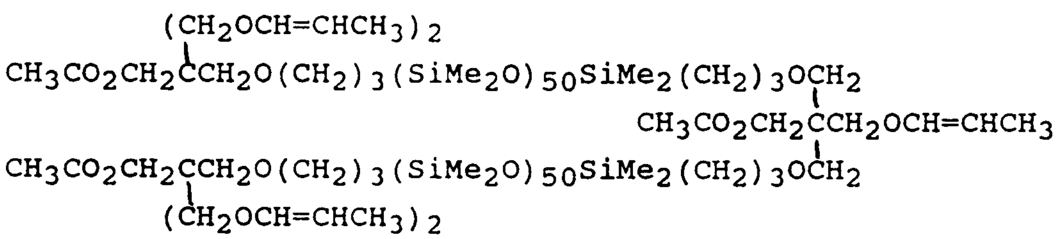

Der Reaktionsablauf und damit das erhaltene Endprodukt hängt entscheidend von dem in der 1. Stufe eingesetzten Verhältnis von C=C-Doppelbindung in organischer Verbindung (1) zu Si-gebundenem Wasserstoff in Organopolysiloxan (2) ab. Es werden je nach eingesetztem Verhältnis C=C:SiH - wobei das Verhältnis C=C:SiH immer größer als 1 sein muß - Siloxancopolymere erhalten, die am Kettenende und entlang der Kette freie Alkenylgruppen A der Formel

$-OCHR^2CR^2=CH_2$, wie $-OCH_2CH=CH_2$,

aufweisen, wobei es zu Verzweigungen entlang der Kette kommen kann durch Weiterreaktion der freien Alkenylgruppen entlang der Kette mit den Si-gebundenen Wasserstoffatomen des Organopolysiloxans (2). In der 2. Stufe wird dann die Doppelbindung in den freien Alkenylgruppen A umgelagert und es werden freie Alkenyloxygruppen B der Formel

$-OCR^2=CR^2CH_3$, wie $-OCH=CHCH_3$,

erhalten. In der 1. Stufe werden in Gegenwart von den Platinkatalysatoren die Allyloxygruppen, $-OCH_2CH=CH_2$, bereits in einem geringen Ausmaß (bis zu 15 Mol%) zu Propenyloxygruppen, $-OCH=CHCH_3$, umgelagert, so daß in der 2. Stufe sich ein Gleichgewicht zwischen Allyloxy- und

Propenyloxygruppen einstellt, in dem das Verhältnis von Allyloxygruppen zu Propenyloxygruppen üblicherweise 4:96 beträgt, also ein Umsatz in bezug auf die Propenyloxygruppen von ca. 96 % erzielt wird.

Die verschiedenen Stufen des erfindungsgemäßen Verfahrens können in ein und demselben Reaktionsgefäß hintereinander oder in von einander getrennten Reaktionsgefäßen durchgeführt werden. Vorzugsweise wird es in ein und demselben Reaktionsgefäß hintereinander durchgeführt. Das erfindungsgemäße Verfahren kann absatzweise, halbkontinuierlich oder vollkontinuierlich durchgeführt werden.

Die erfindungsgemäßen Alkenyloxygruppen aufweisenden Siloxancopolymere sind in einer durch Licht initiierten, kationischen Polymerisation vernetzbar. Als Katalysatoren für die durch Licht initiierte Vernetzung können beispielsweise die in US-A 4 279 717 (ausgegeben 21. Juli 1981, Eckberg et al., General Electric Company) beschriebenen Bis-(dodecylphenyl)iodoniumsalze, wie Bis-(dodecylphenyl)-iodoniumhexafluoroantimonat oder Bis-(dodecylphenyl)iodoniumhexafluoroarsenat verwendet werden.

Gegenstand der Erfindung ist daher die Verwendung von Alkenyloxygruppen aufweisenden Siloxancopolymeren vorzugsweise enthaltend Einheiten der Formel (I), (II) und gegebenenfalls mindestens eine der Einheiten der Formel (III), (IV) oder (V), bevorzugt enthaltend Einheiten der Formel (I'), (II') und (III'), in durch Licht vernetzbare Zusammensetzungen auf Grundlage von vorstehend genannten Siloxancopolymeren.

Vorzugsweise werden die erfindungsgemäßen Alkenyloxygruppen aufweisenden Siloxancopolymere durch Ultraviolettlicht vernetzt, wobei solches mit Wellenlängen im Bereich von 200 bis 400 nm bevorzugt ist. Das Ultraviolettlicht kann z.B. in Xenon-, Quecksilbernieder-, Quecksilbermittel- oder Quecksilberhochdrucklampen erzeugt werden. Zur Vernetzung durch Licht ist auch solches mit einer Wellenlänge von 400 bis 600 nm, also sogenanntes "Halogenlicht", geeignet. Die erfindungsgemäßen Alkenyloxygruppen aufweisenden Siloxancopolymere können durch Licht im sichtbaren Bereich vernetzt werden, wenn handelsübliche Photosensibilisatoren mitverwendet werden.

Die kationische Polymerisation der erfindungsgemäßen Alkenyloxygruppen aufweisenden Siloxancopolymere kann natürlich auch durch dafür übliche Brönsted- oder Lewissäuren eingeleitet werden.

Gegenstand der Erfindung ist schließlich auch die Verwendung der erfindungsgemäßen Alkenyloxygruppen aufweisenden Siloxancopolymeren zur Herstellung von durch Licht vernetzbare Überzüge.

Beispiele für Oberflächen, auf welche die erfindungsgemäßen Überzüge aufgebracht werden können, sind diejenigen von Papier, Holz, Kork, Kunststoffolien, z.B. Polyethylenfolien oder Polypropylenfolien, keramischen Gegenständen, Glas, einschließlich Glasfasern, Metallen, Pappen, einschließlich solcher aus Asbest, und von gewebtem und ungewebtem Tuch aus natürlichen oder synthetischen organischen Fasern.

Das Auftragen der erfindungsgemäßen Alkenyloxygruppen aufweisenden Siloxancopolymeren auf die zu überziehenden Oberflächen kann in beliebiger, für die Herstellung von Überzügen aus flüssigen Stoffen geeigneter und vielfach bekannter Weise erfolgen, beispielsweise durch Tauchen, Streichen, Gießen, Sprühen, Aufwalzen, Drucken, z. B. mittels einer Offsetgravurüberzugsvorrichtung, Messer- oder Rakelbeschichtung.

Beispiel 1:

89 g 1,1,2,2-Tetraallyloxyethan werden mit 5,4 mg Platin in Form einer Lösung von Platintetrachlorid in 1-Octen vermischt und die Mischung wird auf 110 °C erwärmt. Zu dieser Mischung werden unter Stickstoffatmosphäre und Rühren bei 110 °C 581 g eines $\alpha,\omega$-Dihydrogendimethylpolysiloxans, das 250 mg Si-gebundenen Wasserstoff enthält, zugetropft. Nach ca. 3 Stunden Rühren bei 110 °C sind 98 % der Si-gebundenen Wasserstoffatome des $\alpha,\omega$-Dihydrogendimethylpolysiloxans umgesetzt. Bei 120 °C und $10^{-3}$ hPa werden dann alle flüchtigen Bestandteile destillativ entfernt. Zu dem Umsetzungprodukt werden dann bei 130 °C und 1020 hPa (abs.) unter Stickstoffatmosphäre 110 mg $RuHCl(Ph_3P)_3$ zugesetzt und die Mischung 16 Stunden lang bei 130 °C gerührt. Es wird eine klare, gelbe Flüssigkeit mit einer Viskosität von ca. 1100 mPa•s bei 25 °C erhalten. Das so gewonnene Siloxancopolymer enthält im wesentlichen neben Dimethylsiloxaneinheiten, Siloxaneinheiten der Formel

$$\begin{array}{l} \qquad\qquad\qquad\quad OCH{=}CHCH_3 \\ \qquad\qquad\qquad\quad | \\ (CH_3CH{=}CHO)_2CHCHO(CH_2)_3SiO_{3/2} \end{array}$$

und Brückeneinheiten der Formel

$$\begin{array}{c} CH_3CH{=}CHO\quad OCH{=}CHCH_3 \\ \quad\quad | \quad\ | \\ O(CH_3)_2Si(CH_2)_3OCHCHO(CH_2)_3Si(CH_3)_2O \end{array} \;,$$

wobei bei den 1-Propenyloxygruppen, $CH_3CH=CHO$-, gemäß dem $^1$H-NMR-Spektrum das Verhältnis von cis-Isomer zu trans-Isomer 70 : 30 beträgt. Das 1-Propenyloxygruppen aufweisende Siloxancopolymer besitzt ein Äquivalentgewicht von ca. 1300 g pro Mol C = C-Doppelbindung.

Beispiel 2:

114,4 g Trimethylolpropanallylether (hergestellt gemäß EP-B 46 731 ) mit einer Jodzahl ( = Zahl, die angibt, wieviel g Jod von 100 g Substanz gebunden werden) von 266 werden mit 3,8 mg Platin in Form einer Lösung von Platintetrachlorid in 1-Octen vermischt und die Mischung wird auf 105 °C erwärmt. Zu dieser Mischung werden unter Stickstoffatmosphäre und Rühren bei 105 °C 273 g eines $\alpha,\omega$-Dihydrogendimethylpolysiloxans, das 0,6 g Si-gebundenen Wasserstoff enthält, zugetropft. Nach ca. 4 Stunden Rühren bei 105 °C sind 99 % der Si-gebundenen Wasserstoffatome des $\alpha,\omega$-Dihydrogendimethylpolysiloxans umgesetzt. Bei 120 °C und $10^{-3}$ hPa werden dann alle flüchtigen Bestandteile destillativ entfernt. Zu dem Umsetzungprodukt werden dann bei 130 °C und 1020 hPa (abs.) unter Stickstoffatmosphäre 200 Gew.-ppm $RuHCl(Ph_3P)_3$ zugesetzt und die Mischung 8 Stunden lang bei 130 °C gerührt. Es werden 315 g eines klaren, fast farblosen Öls mit einer Viskosität von 380 $mm^2 \cdot s^{-1}$ bei 25 °C erhalten. Das so gewonnene 1-Propenyloxygruppen aufweisende Siloxancopolymer besitzt ein Äquivalentgewicht von ca. 900 g pro Mol C = C-Doppelbindung.

Beispiel 3:

48 g Pentaerythrittriallylether mit einer Jodzahl von 281 (käuflich erwerblich bei der Fa. Shell) werden mit 2,2 mg Platin in Form einer Lösung von Platintetrachlorid in 1-Octen vermischt und die Mischung wird auf 105 °C erwärmt. Zu dieser Mischung werden unter Stickstoffatmosphäre und Rühren bei 105 °C 435 g eines $\alpha,\omega$-Dihydrogendimethylpolysiloxans, das 0,046 Gew.-% Si-gebundenen Wasserstoff enthält, zugetropft. Nach ca. 8 Stunden Rühren bei 105 °C sind 98 % der Si-gebundenen Wasserstoffatome des $\alpha,\omega$-Dihydrogendimethylpolysiloxans umgesetzt. Bei 120 °C und $10^{-3}$ hPa werden dann alle flüchtigen Bestandteile destillativ entfernt. Nach dem Filtrieren werden zu dem Umsetzungprodukt dann bei 130 °C und 1020 hPa (abs.) unter Stickstoffatmosphäre 76 mg $RuHCl(Ph_3P)_3$ zugesetzt und die Mischung 8 Stunden lang bei 130 °C gerührt. Es wird ein 1-Propenyloxygruppen aufweisendes Siloxancopolymer erhalten, das eine Viskosität von 1190 $mm^2 \cdot s^{-1}$ hat, das eine 1-Propenyloxygruppe pro 32 Siliziumatome besitzt und ein Äquivalentgewicht von ca. 2400 g pro Mol C = C-Doppelbindung aufweist. Das Verhältnis von cis-Isomer zu trans-Isomer beträgt bei den 1-Propenyloxygruppen oxygruppen 70 : 30. Folgende Daten werden aus dem $^1$H-NMR-Spektrum erhalten:

| $^1$H-NMR-Spektrum ($CDCl_3$): | |
|---|---|
| trans-Isomer: (30 Mol-%) | $\delta$ = 4,78 ppm (1H, $CH_3$-C$\underline{H}$ = ), 6,22 ppm (1H, = CH-O-). |
| cis-Isomer: (70 Mol-%) | $\delta$ = 4,37 ppm (1H, $CH_3$-C$\underline{H}$ = ), 5,95 ppm (1H, = CH-O-). |

Beispiel 4:

Zu 100 g des in Beispiel 3 hergestellten Siloxancopolymeren werden 2 g einer 50 %-igen Lösung von Bis-(dodecylphenyl)jodonium-hexafluoroantimonat, das gemäß US-A 4 279 717 hergestellt wurde, in Propylencarbonat zugegeben. Die Mischung wird mit einem Glasstab auf mit Polyethylen beschichtetes Papier in einer Dicke von 3 $\mu$ aufgetragen. In einem Abstand von 10 cm zum beschichteten Substrat sind zwei Quecksilbermitteldrucklampen mit einer Leistung von 80 Watt/cm Leuchtlänge angebracht. Nach weniger als zwei Sekunden UV-Belichtung wird ein klebfreier Überzug erhalten, der Klebstoff abweisend gegenüber mit Acrylatkleber beschichtete Papieretiketten ist.

## Patentansprüche

## Patentansprüche für folgende Vertragsstaaten : AT, BE, CH, DE, FR, GB, IT, LI, NL, SE

1. Alkenyloxygruppen aufweisende Siloxancopolymere enthaltend
   (a) Siloxaneinheiten der Formel

$$R_aSi(OR^1)_bO_{\frac{4-(a+b)}{2}} \quad (I),$$

   wobei R gleiche oder verschiedene, gegebenfalls halogenierte Kohlenwasserstoffreste mit 1 bis 18 Kohlenstoffatom(en) je Rest,
   $R^1$ gleiche oder verschiedene Alkylreste mit 1 bis 4 Kohlenstoffatom(en) je Rest, die durch ein Ethersauerstoffatom substituiert sein können, bedeutet,
   a 0, 1, 2 oder 3,
   b 0, 1, 2 oder 3
   und die Summe a + b nicht größer als 3 ist,
   (b) je Molekül mindestens eine Siloxaneinheit der Formel

$$QR_cSiO_{\frac{4-(c+1)}{2}} \quad (II)$$

   wobei R die oben dafür angegebene Bedeutung hat,
   c 0, 1 oder 2 ist,
   Q einen Rest der Formel

$$-CH_2CHR^2CHR^2OY(OCR^2=CR^2CH_3)_{x-1}$$

   bedeutet, wobei $R^2$ gleich oder verschieden ist, ein Wasserstoffatom oder einen Methylrest bedeutet,
   Y einen dreiwertigen, vierwertigen, fünfwertigen oder sechswertigen Kohlenwasserstoffrest mit 2 bis 20 Kohlenstoffatomen je Rest bedeutet,
   der durch Gruppen der Formel
   - OH
   - $OR^3$ (wobei $R^3$ einen Alkylrest mit 1 bis 6 Kohlenstoffatom(en) je Rest bedeutet)
   - $OSiR^4_3$ (wobei $R^4$ einen Methyl-, Ethyl-, Isopropyl-, tert.-Butyl-, oder Phenylrest bedeuten)
   -

$$\underset{\substack{\| \\ O}}{OCR^3}$$

   (wobei $R^3$ die oben dafür angegebene Bedeutung hat) oder
   - X (wobei X ein Halogenatom bedeutet)
   substituiert sein kann
   oder durch mindestens ein Sauerstoffatom, Schwefelatom oder eine Carbonylgruppe unterbrochen sein kann,
   oder einen dreiwertigen Rest der Formel

$$\equiv P, \equiv P=O \text{ oder } \equiv SiR^5$$

   bedeutet, wobei $R^5$ einen einwertigen Kohlenwasserstoffrest mit 1 bis 8 Kohlenstoffatom(en) je Rest bedeutet,
   oder ein vierwertiges Element, wie

$$-\overset{|}{\underset{|}{C}}-,\quad -\overset{|}{\underset{|}{Si}}-\quad \text{oder}\quad -\overset{|}{\underset{|}{Ti}}-$$

bedeutet und

x 3, 4, 5 oder 6 ist,

und gegebenenfalls

(c) je Molekül mindestens eine Einheit ausgewählt aus der Gruppe von Einheiten der Formel

$$O_{\frac{4-(c+1)}{2}}R_cSi-Q^1-SiR_cO_{\frac{4-(c+1)}{2}} \qquad (III),$$

$$O_{\frac{4-(c+1)}{2}}R_cSi-\underset{\textstyle SiR_cO_{\frac{4-(c+1)}{2}}}{\underset{|}{Q^2}}-SiR_cO_{\frac{4-(c+1)}{2}} \qquad (IV) \quad \text{und}$$

$$O_{\frac{4-(c+1)}{2}}R_c\ Si-\underset{\textstyle SiR_cO_{\frac{4-(c+1)}{2}}}{\underset{|}{\overset{\textstyle SiR_cO_{\frac{4-(c+1)}{2}}}{\overset{|}{Q^3}}}}-SiR_cO_{\frac{4-(c+1)}{2}} \qquad (V),$$

wobei R und c die oben dafür angegebene Bedeutung haben,

$Q^1$ einen Rest der Formel

$$-CH_2CHR^2CHR^2O-\overset{(OCR^2=CR^2CH_3)_{x-2}}{\overset{|}{Y}}-OCHR^2CHR^2CH_2-$$

$Q^2$ einen Rest der Formel

$$-CH_2CHR^2CHR^2O-\underset{OCHR^2CHR^2CH_2-}{\underset{|}{\overset{(OCR^2=CR^2CH_3)_{x-3}}{\overset{|}{Y}}}}-OCHR^2CHR^2CH_2- \qquad \text{und}$$

$Q^3$ einen Rest der Formel

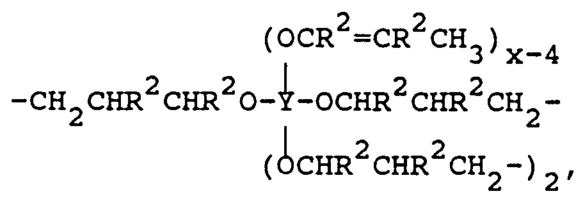

$(x-4 \geq 0)$

wobei $R^2$, Y und x die oben dafür angegebene Bedeutung haben, bedeutet.

**2.** Alkenyloxygruppen aufweisende Siloxancopolymere nach Anspruch 1, dadurch gekennzeichnet, daß sie Siloxaneinheiten der Formel (I), je Molekül mindestens eine Siloxaneinheit der Formel (II) und je Molekül mindestens eine Einheit ausgewählt aus der Gruppe der Einheiten der Formel (III), (IV) und (V) enthalten.

**3.** Alkenyloxygruppen aufweisende Siloxancopolymere nach Anspruch 1 oder 2, dadurch gekennzeichnet, daß sie enthalten

(a) Siloxaneinheiten der Formel

$R_2SiO$ (I')

(b) je Molekül mindestens zwei Siloxaneinheiten der Formel

$QR_2SiO_{1/2}$ (II')

und

(c) je Molekül mindestens eine Einheit der Formel

$O_{1/2}R_2SiQ^1SiR_2O_{1/2}$ (III') ,

wobei R gleiche oder verschiedene, gegebenenfalls halogenierte Kohlenwasserstoffreste mit 1 bis 18 Kohlenstoffatom(en) je Rest,

Q einen Rest der Formel

$-CH_2CHR^2CHR^2OY(OCR^2=CR^2CH_3)_{x-1}$

$Q^1$ einen Rest der Formel

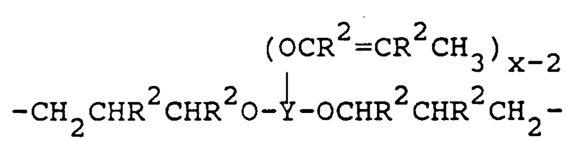

bedeutet, wobei $R^2$ gleich oder verschieden ist, ein Wasserstoffatom oder ein Methylrest bedeutet,

x 3, 4, 5 oder 6 ist und

Y einen dreiwertigen, vierwertigen, fünfwertigen oder sechswertigen Kohlenwasserstoffrest mit 2 bis 20 Kohlenstoffatomen je Rest bedeutet,

der durch Gruppen der Formel

- OH
- $OR^3$ (wobei $R^3$ einen Alkylrest mit 1 bis 6 Kohlenstoffatom(en) je Rest bedeutet)
- $OSiR^4_3$ (wobei $R^4$ einen Methyl-, Ethyl-, Isopropyl-, tert.-Butyl- oder Phenylrest bedeutet)

-

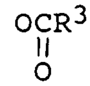

(wobei $R^3$ die oben dafür angegebene Bedeutung hat) oder

- X (wobei X ein Halogenatom bedeutet)

substituiert sein kann

oder durch mindestens ein Sauerstoffatom, Schwefelatom oder eine Carbonylgruppe unterbrochen sein kann,

oder einen dreiwertigen Rest der Formel

$\equiv P$, $\equiv P = O$ oder $\equiv SiR^5$

bedeutet, wobei $R^5$ einen einwertigen Kohlenwasserstoffrest mit 1 bis 8 Kohlenstoffatom(en) je Rest bedeutet,

oder ein vierwertiges Element, wie

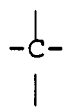, 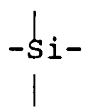 oder 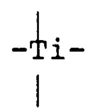

bedeutet.

**4.** Verfahren zur Herstellung der Alkenyloxygruppen aufweisenden Siloxancopolymere nach einem der Ansprüche 1 bis 3, dadurch gekennzeichnet, daß in einer 1. Stufe eine mehr als zwei aliphatische Doppelbindungen aufweisende organische Verbindung (1) der allgemeinen Formel

$Y(OCHR^2CR^2 = CH_2)_x$ ,

wobei $R^2$ gleich oder verschieden ist, ein Wasserstoffatom oder einen Methylrest bedeutet,

x 3, 4, 5 oder 6 ist und

Y einen dreiwertigen, vierwertigen, fünfwertigen oder sechswertigen Kohlenwasserstoffrest mit 2 bis 20 Kohlenstoffatomen je Rest bedeutet,

der durch Gruppen der Formel

- OH
- $OR^3$ (wobei $R^3$ einen Alkylrest mit 1 bis 6 Kohlenstoffatom(en) je Rest bedeutet)
- $OSiR^4_3$ (wobei $R^4$ einen Methyl-, Ethyl-, Isopropyl-, tert.-Butyl- oder Phenylrest bedeutet)
-

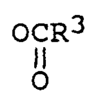

(wobei $R^3$ die oben dafür angegebene Bedeutung hat) oder

- X (wobei X ein Halogenatom bedeutet)

substituiert sein kann

oder durch mindestens ein Sauerstoffatom, Schwefelatom oder eine Carbonylgruppe unterbrochen sein kann,

oder einen dreiwertigen Rest der Formel

$\equiv P$, $\equiv P = O$ oder $\equiv SiR^5$

bedeutet, wobei $R^5$ einen einwertigen Kohlenwasserstoffrest mit 1 bis 8 Kohlenstoffatom(en) je

Rest bedeutet,
oder ein vierwertiges Element, wie

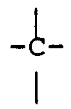, 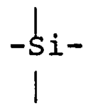 oder 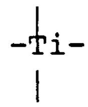

bedeutet,
mit einem Organopolysiloxan (2) mit mindestens einem Si-gebundenen Wasserstoffatom je Molekül in Gegenwart von einem die Anlagerung von Si-gebundenen Wasserstoff an eine aliphatische Doppelbindung fördernden Katalysator (3) umgesetzt wird, wobei das eingesetzte Verhältnis von aliphatische Doppelbindung in organischer Verbindung (1) zu Si-gebundenem Wasserstoff im Organopolysiloxan (2) ein solches ist, daß Alkenylgruppen aufweisende Siloxancopolymere mit durchschnittlich mehr als zwei Alkenylgruppen A der Formel

$-OCHR^2CR^2=CH_2$ ,

wobei $R^2$ die oben dafür angegebene Bedeutung hat, erhalten werden und dann
in einer 2. Stufe
die Doppelbindung in den Alkenylgruppen A zu dem dem Ethersauerstoffatom benachbarten Kohlenstoffatom umgelagert wird durch Erhitzen des in der 1. Stufe gewonnenen Alkenylgruppen aufweisenden Siloxancopolymeren in Gegenwart eines eine solche Umlagerung der Doppelbindung fördernden Katalysators (4), wobei Alkenyloxygruppen aufweisende Siloxancopolymere mit durchschnittlich mehr als zwei Alkenyloxygruppen B der Formel

$-OCR^2=CR^2CH_3$ ,

wobei $R^2$ die oben dafür angegebene Bedeutung hat, erhalten werden.

**5.** Verfahren nach Anspruch 4, dadurch gekennzeichnet, daß als organische Verbindung (1) solche der Formel

$(R^6OCH_2)_{4-k}C(CH_2OCH_2CH=CH_2)_k$,

wobei $R^6$ Wasserstoff oder einen Rest der Formel

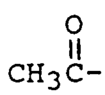

bedeutet und k durchschnittlich 2,5 bis 3,5 ist, verwendet wird.

**6.** Verfahren nach Anspruch 4, dadurch gekennzeichnet, daß als Organopolysiloxan (2) mit mindestens einem Si-gebundenen Wasserstoffatom je Molekül solches der allgemeinen Formel

$H_dR_{3-d}SiO(SiR_2O)_o(SiRHO)_pSiR_{3-d}H_d$ (VII),

wobei R gleiche oder verschiedene, gegebenenfalls halogenierte Kohlenwasserstoffreste mit 1 bis 18 Kohlenstoffatom(en) je Rest,
d 0 oder 1,
o 0 oder eine ganze Zahl von 1 bis 1000 und
p 0 oder eine ganze Zahl von 1 bis 6 bedeutet,
verwendet wird.

7. Verwendung der Alkenyloxygruppen aufweisenden Siloxancopolymere nach Anspruch 1, 2 oder 3 in durch Licht vernetzbare Zusammensetzungen auf Grundlage von vorstehend genannten Organopolysiloxanen.

8. Verwendung der Alkenyloxygruppen aufweisenden Siloxancopolymere nach Anspruch 1, 2 oder 3 zur Herstellung von durch Licht vernetzbare Überzüge.

**Patentansprüche für folgenden Vertragsstaat : ES**

1. Verfahren zur Herstellung von Alkenyloxygruppen aufweisenden Siloxancopolymeren, dadurch gekennzeichnet, daß in einer 1 Stüfe eine mehr als zwei aliphatische Doppelbindungen aufweisende organische Verbindung (1) der allgemeinen Formel

$Y(OCHR^2CR^2=CH_2)_x$ ,

wobei $R^2$ gleich oder verschieden ist, ein Wasserstoffatom oder einen Methylrest bedeutet,
x 3, 4, 5 oder 6 ist und
Y einen dreiwertigen, vierwertigen, fünfwertigen oder sechswertigen Kohlenwasserstoffrest mit 2 bis 20 Kohlenstoffatomen je Rest bedeutet,
der durch Gruppen der Formel
- OH
- $OR^3$ (wobei $R^3$ einen Alkylrest mit 1 bis 6 Kohlenstoffatom(en) je Rest bedeutet)
- $OSiR^4_3$ (wobei $R^4$ einen Methyl-, Ethyl-, Isopropyl-, tert.-Butyl- oder Phenylrest bedeutet)
-

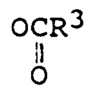

(wobei $R^3$ die oben dafür angegebene Bedeutung hat) oder
- X (wobei X ein Halogenatom bedeutet)
substituiert sein kann
oder durch mindestens ein Sauerstoffatom, Schwefelatom oder eine Carbonylgruppe unterbrochen sein kann,
oder einen dreiwertigen Rest der Formel

$\equiv P$, $\equiv P=O$ oder $\equiv SiR^5$

bedeutet, wobei $R^5$ einen einwertigen Kohlenwasserstoffrest mit 1 bis 8 Kohlenstoffatom(en) je Rest bedeutet,
oder ein vierwertiges Element, wie

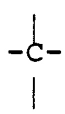 , 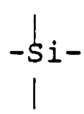 oder 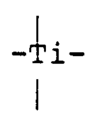

bedeutet,
mit einem Organopolysiloxan (2) mit mindestens einem Si-gebundenen Wasserstoffatom je Molekül in Gegenwart von einem die Anlagerung von Si-gebundenen Wasserstoff an aliphatische Doppelbindung fördernden Katalysator (3) umgesetzt wird, wobei das eingesetzte Verhältnis von aliphatische Doppelbindung in organischer Verbindung (1) zu Si-gebundenem Wasserstoff im Organopolysiloxan (2) ein solches ist, daß Alkenylgruppen aufweisende Siloxancopolymere mit durchschnittlich mehr als zwei Alkenylgruppen A der Formel

$-OCHR^2CR^2=CH_2$ ,

wobei $R^2$ die oben dafür angegebene Bedeutung hat, erhalten werden und dann

in einer 2. Stufe

die Doppelbindung in den Alkenylgruppen A zu dem dem Ethersauerstoffatom benachbarten Kohlenstoffatom umgelagert wird durch Erhitzen des in der 1. Stufe gewonnenen Alkenylgruppen aufweisenden Siloxancopolymeren in Gegenwart eines eine solche Umlagerung der Doppelbindung fördernden Katalysators (4), wobei Alkenyloxygruppen aufweisende Siloxancopolymere mit durchschnittlich mehr als zwei Alkenyloxygruppen B der Formel

$-OCR^2=CR^2CH_3$ ,

wobei $R^2$ die oben dafür angegebene Bedeutung hat, erhalten werden.

**2.** Verfahren nach Anspruch 1, dadurch gekennzeichnet, daß als organische Verbindung (1) solche der Formel

$(R^6OCH_2)_{4-k}C(CH_2OCH_2CH=CH_2)_k$,

wobei $R^6$ Wasserstoff oder einen Rest der Formel

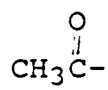

bedeutet und k durchschnittlich 2,5 bis 3,5 ist, verwendet wird.

**3.** Verfahren nach Anspruch 1, dadurch gekennzeichnet, daß als Organopolysiloxan (2) mit mindestens einem Si-gebundenen Wasserstoffatom je Molekül solches der allgemeinen Formel

$H_dR_{3-d}SiO(SiR_2O)_o(SiRHO)_pSiR_{3-d}H_d$ (VII),

wobei R gleiche oder verschiedene, gegebenenfalls halogenierte Kohlenwasserstoffreste mit 1 bis 18 Kohlenstoffatom(en) je Rest,

d 0 oder 1,

o 0 oder eine ganze Zahl von 1 bis 1000 und

p 0 oder eine ganze Zahl von 1 bis 6 bedeutet,

verwendet wird.

**4.** Verwendung von Alkenyloxygruppen aufweisenden Siloxancopolymeren herstellbar nach Anspruch 1, 2 oder 3 in durch Licht vernetzbaren Zusammensetzungen auf Grundlage von vorstehend genannten Organopolysiloxanen.

**5.** Verwendung von Alkenyloxygruppen aufweisenden Siloxancopolymeren herstellbar nach Anspruch 1, 2 oder 3 zur Herstellung von durch Licht vernetzbaren Überzügen.

**Claims**

**Claims for the following Contracting States : AT, BE, CH, DE, FR, GB, IT, LI, NL, SE**

**1.** Siloxane copolymer which contains alkenyloxy groups and contains

(a) siloxane units of the formula

$$R_aSi(OR^1)_bO_{\frac{4-(a+b)}{2}} \qquad (I)$$

in which R denotes identical or different optionally halogenated hydrocarbon radicals having 1 to 18

carbon atom(s) per radical,
$R^1$ denotes identical or different alkyl radicals which have 1 to 4 carbon atom(s) per radical and can be substituted by an ether oxygen atom,
a is 0, 1, 2 or 3,
b is 0, 1, 2 or 3 and
the sum of a + b is not greater than 3,
(b) at least one siloxane unit per molecule of the formula

$$QR_cSiO_{\frac{4-(c+1)}{2}} \quad (II)$$

in which R has the meaning given above for this radical,
c is 0, 1 or 2 and
Q denotes a radical of the formula

$$-CH_2CHR^2CHR^2OY(OCR^2=CR^2CH_3)_{x-1}$$

in which $R^2$ is identical or different and denotes a hydrogen atom or a methyl radical,
Y denotes a trivalent, tetravalent, pentavalent or hexavalent hydrocarbon radical which has 2 to 20 carbon atoms per radical and can be substituted by groups of the formula
- OH
- $OR^3$ (in which $R^3$ denotes an alkyl radical having 1 to 6 carbon atom(s) per radical),
- $OSiR^4_3$ (in which $R^4$ denote a methyl, ethyl, isopropyl, tert.-butyl or phenyl radical),
- $\underset{\underset{O}{\|}}{OCR^3}$

  (in which $R^3$ has the meaning given above for this radical) or
- X (in which X denotes a halogen atom),

or can be interrupted by at least one oxygen atom or sulphur atom or one carbonyl group, or denotes a trivalent radical of the formula

$\equiv P$, $\equiv P=O$ or $\equiv SiR^5$

in which $R^5$ denotes a monovalent hydrocarbon radical having 1 to 8 carbon atom(s) per radical, or denotes a tetravalent element, such as

$$-\overset{|}{\underset{|}{C}}- \quad , \quad -\overset{|}{\underset{|}{Si}}- \quad \text{or} \quad -\overset{|}{\underset{|}{Ti}}-$$

and
x is 3, 4, 5 or 6,
and optionally

(c) at least one unit per molecule selected from the group of units of the formula

$$O_{\frac{4-(c+1)}{2}}R_cSi-Q^1-SiR_cO_{\frac{4-(c+1)}{2}} \qquad (III),$$

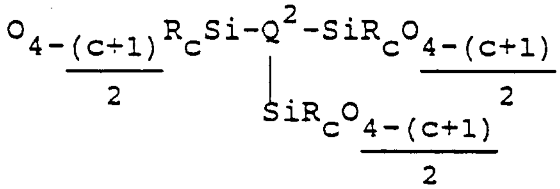

(IV), and

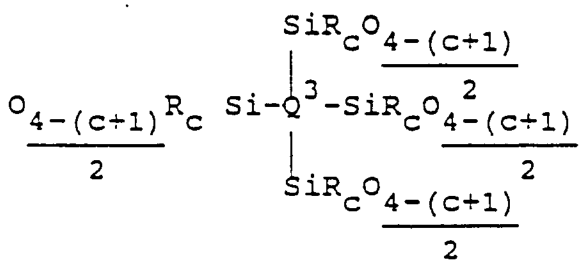

(V)

in which R and c have the meaning given above for this radical and index,

$Q^1$ denotes a radical of the formula

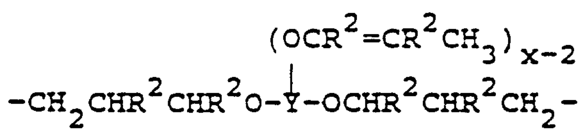

$Q^2$ denotes a radical of the formula

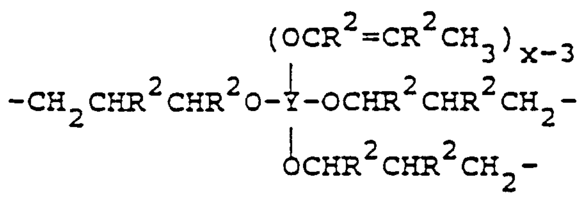

and

$Q^3$ denotes a radical of the formula

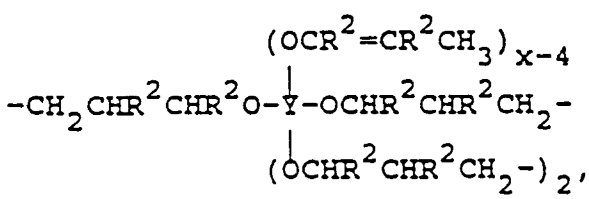

$(x-4 \geq 0)$

in which $R^2$, Y and x have the meaning given above for these radicals and this index.

**2.** Siloxane copolymer containing alkenyloxy groups according to Claim 1, characterized in that it contains siloxane units of the formula (I), at least one siloxane unit per molecule of the formula (II) and at least one unit per molecule selected from the group comprising units of the formula (III), (IV) and (V).

**3.** Siloxane copolymer containing alkenyloxy groups according to Claim 1 or 2, characterized in that it contains

(a) siloxane units of the formula

$R_2SiO$ (I')

(b) at least two siloxane units per molecule of the formula

$QR_2SiO_{1/2}$ (II')

and

(c) at least one unit per molecule of the formula

$O_{1/2}R_2SiQ^1SiR_2O_{1/2}$ (III')

in which R denotes identical or different, optionally halogenated hydrocarbon radicals having 1 to 18 carbon atom(s) per radical,

Q denotes a radical of the formula

$-CH_2CHR^2CHR^2OY(OCR^2=CR^2CH_3)_{x-1}$

$Q^1$ denotes a radical of the formula

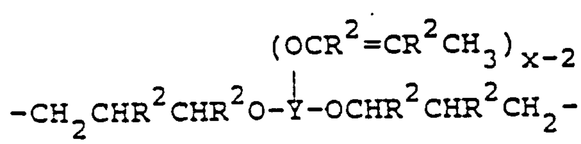

in which $R^2$ is identical or different and denotes a hydrogen atom or a methyl radical,

x is 3, 4, 5 or 6 and

Y denotes a trivalent, tetravalent, pentavalent or hexavalent hydrocarbon radical which has 2 to 20 carbon atoms per radical and can be substituted by groups of the formula

- OH
- $OR^3$ (in which $R^3$ denotes an alkyl radical having 1 to 6 carbon atom(s) per radical),
- $OSiR^4_3$ (in which $R^4$ denotes a methyl, ethyl, isopropyl, tert.-butyl or phenyl radical),
- 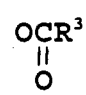

  (in which $R^3$ has the meaning given above for this radical) or
- X (in which X denotes a halogen atom),

or can be interrupted by at least one oxygen atom or sulphur atom or one carbonyl group, or denotes a trivalent radical of the formula

$\equiv P$, $\equiv P=O$ or $\equiv SiR^5$

in which $R^5$ denotes a monovalent hydrocarbon radical having 1 to 8 carbon atom(s) per radical, or denotes a tetravalent element, such as

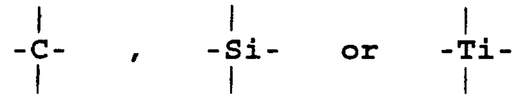

**4.** Process for the preparation of the siloxane copolymer containing alkenyloxy groups according to any of Claims 1 to 3, characterized in that, in a first stage, an organic compound (1) containing more than two aliphatic double bonds, of the general formula

$Y(OCHR^2CR^2=CH_2)_x$

in which $R^2$ is identical or different and denotes a hydrogen atom or a methyl radical,

x is 3, 4, 5 or 6 and

Y denotes a trivalent, tetravalent, pentavalent or hexavalent hydrocarbon radical which has 2 to 20 carbon atoms per radical and can be substituted by groups of the formula

- OH
- $OR^3$ (in which $R^3$ denotes an alkyl radical having 1 to 6 carbon atom(s) per radical),
- $OSiR^4_3$ (in which $R^4$ denotes a methyl, ethyl, isopropyl, tert.-butyl or phenyl radical),
- 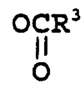

(in which $R^3$ has the meaning given above for this radical) or

- X (in which X denotes a halogen atom),

or can be interrupted by at least one oxygen atom or sulphur atom or one carbonyl group, or denotes a trivalent radical of the formula

$\equiv P$, $\equiv P=O$ or $\equiv SiR^5$

in which $R^5$ denotes a monovalent hydrocarbon radical having 1 to 8 carbon atom(s) per radical, or denotes a tetravalent element, such as

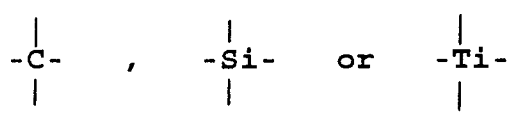

is reacted with an organopolysiloxane (2) having at least one Si-bonded hydrogen atom per molecule in the presence of a catalyst (3) which promotes the addition of Si-bonded hydrogen onto an aliphatic double bond, the ratio employed for the aliphatic double bond in the organic compound (1) to the Si-bonded hydrogen in the organopolysiloxane (2) being a ratio such that siloxane copolymers which contain alkenyl groups and have on average more than two alkenyl groups A of the formula

$-OCHR^2CR^2=CH_2$

in which $R^2$ has the meaning given above for this radical, are obtained, and then, in a 2nd stage, the double bond in the alkenyl groups A is shifted to the carbon atom adjacent to the ether oxygen atom by heating the siloxane copolymer containing alkenyl groups obtained in the 1st stage in the presence of a catalyst (4) which promotes such a shift of the double bond, siloxane copolymers which contain alkenyloxy groups and have on average more than two alkenyloxy groups B of the formula

$-OCR^2=CR^2CH_3$

in which $R^2$ has the meaning given above for this radical, being obtained.

5. Process according to Claim 4, characterized in that the organic compound (1) used is one of the formula

$(R^6OCH_2)_{4-k}C(CH_2OCH_2CH=CH_2)_k$,

in which $R^6$ denotes hydrogen or a radical of the formula

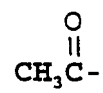

and k is on average 2.5 to 3.5.

6. Process according to Claim 4, characterized in that the organopolysiloxane (2) having at least one Si-bonded hydrogen atom per molecule which is used is one of the general formula

$H_dR_{3-d}SiO(SiR_2O)_o(SiRHO)_pSiR_{3-d}H_d$ (VII)

in which R denotes identical or different, optionally halogenated hydrocarbon radicals having 1 to 18 carbon atom(s) per radical, d denotes 0 or 1, o denotes 0 or an integer from 1 to 1000 and p denotes 0 or an integer from 1 to 6.

7. Use of a siloxane copolymer containing alkenyloxy groups according to any of Claims 1, 2 or 3 in a composition which is based on one of the abovementioned organo-polysiloxanes and can be crosslinked by means of light.

8. Use of a siloxane copolymer containing alkenyloxy groups according to any of Claims 1, 2 or 3 for the preparation of coverings which can be crosslinked by means of light.

**Claims for the following Contracting State : ES**

1. Process for the preparation of the siloxane copolymer containing alkenyloxy groups characterized in that, in a first stage, an organic compound (1) containing more than two aliphatic double bonds, of the general formula

$Y(OCHR^2CR^2=CH_2)_x$

in which $R^2$ is identical or different and denotes a hydrogen atom or a methyl radical,

x is 3, 4, 5 or 6 and

Y denotes a trivalent, tetravalent, pentavalent or hexavalent hydrocarbon radical which has 2 to 20 carbon atoms per radical and can be substituted by groups of the formula

- OH
- $OR^3$ (in which $R^3$ denotes an alkyl radical having 1 to 6 carbon atom(s) per radical),
- $OSiR^4_3$ (in which $R^4$ denotes a methyl, ethyl, isopropyl, tert.-butyl or phenyl radical),
- 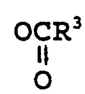

(in which $R^3$ has the meaning given above for this radical) or
- X (in which X denotes a halogen atom),

or can be interrupted by at least one oxygen atom or sulphur atom or one carbonyl group, or denotes a trivalent radical of the formula

≡P, ≡P = O or ≡$SiR^5$

in which $R^5$ denotes a monovalent hydrocarbon radical having 1 to 8 carbon atom(s) per radical, or denotes a tetravalent element, such as

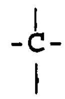 , 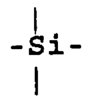 or 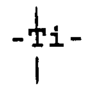

is reacted with an organopolysiloxane (2) having at least one Si-bonded hydrogen atom per molecule in the presence of a catalyst (3) which promotes the addition of Si-bonded hydrogen onto an aliphatic double bond, the ratio employed for the aliphatic double bond in the organic compound (1) to the Si-bonded hydrogen in the organopolysiloxane (2) being a ratio such that siloxane copolymers which contain alkenyl groups and have on average more than two alkenyl groups A of the formula

$-OCHR^2CR^2 = CH_2$

in which $R^2$ has the meaning given above for this radical, are obtained, and then, in a 2nd stage, the double bond in the alkenyl groups A is shifted to the carbon atom adjacent to the ether oxygen atom by heating the siloxane copolymer containing alkenyl groups obtained in the 1st stage in the presence of a catalyst (4) which promotes such a shift of the double bond, siloxane copolymers which contain alkenyloxy groups and have on average more than two alkenyloxy groups B of the formula

$-OCR^2 = CR^2CH_3$

in which $R^2$ has the meaning given above for this radical, being obtained.

**2.** Process according to Claim 1, characterized in that the organic compound (1) used is one of the formula

$(R^6OCH_2)_{4-k}C(CH_2OCH_2CH = CH_2)_k$,

in which $R^6$ denotes hydrogen or a radical of the formula

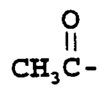

and k is on average 2.5 to 3.5.

**3.** Process according to Claim 1, characterized in that the organopolysiloxane (2) having at least one Si-bonded hydrogen atom per molecule which is used is one of the general formula

$H_dR_{3-d}SiO(SiR_2O)_o(SiRHO)_pSiR_{3-d}H_d$ (VII)

in which R denotes identical or different, optionally halogenated hydrocarbon radicals having 1 to 18 carbon atom(s) per radical, d denotes 0 or 1, o denotes 0 or an integer from 1 to 1000 and p denotes 0 or an integer from 1 to 6.

**4.** Use of a siloxane copolymer containing alkenyloxy groups which can be prepared according to Claim 1, 2 or 3 in a composition which is based on one of the above-mentioned organopolysiloxanes and can be crosslinked by means of light.

**5.** Use of a siloxane copolymer containing alkenyloxy groups which can be prepared according to Claim 1, 2 or 3 for the preparation of coverings which can be crosslinked by means of light.

**Revendications**

**Revendications pour les Etats contractants suivants : AT, BE, CH, DE, FR, GB, IT, LI, NL, SE**

**1.** Copolymères de siloxane présentant des groupes alcényloxy contenant :

(a) des motifs siloxane répondant à la formule :

$$R_aSi(OR^1)_bO_{\frac{4-(a+b)}{2}} \qquad (I),$$

dans laquelle R désigne des radicaux hydrocarbures identiques ou différents, le cas échéant halogénés, ayant 1 à 18 atomes de carbone par radical,
$R^1$ désigne des radicaux alkyle identiques ou différents ayant de 1 à 4 atomes de carbone par radical, qui peuvent être substitués par un atome d'oxygène d'éther,
a est 0, 1, 2 ou 3,
b est 0, 1, 2 ou 3,
et la somme a + b n'est pas supérieure à 3,

(b) par molécule, au moins un motif siloxane répondant à la formule :

$$QR_cSiO_{\frac{4-(c+1)}{2}} \qquad (II)$$

dans laquelle R a la signification indiquée ci-dessus,
c est 0, 1 ou 2,
Q est un radical répondant à la formule :

$-CH_2CHR^2CHR^2OY(OCR^2=CR^2CH_3)_{x-1}$

dans laquelle les symboles $R^2$ sont identiques ou différents et désignent un atome d'hydrogène ou un radical méthyle,
Y désigne un radical hydrocarboné trivalent, tétravalent, pentavalent ou hexavalent ayant de 2 à 20 atomes de carbone par radical,
qui peut être substitué par des groupes répondant aux formules :

- OH
- $OR^3$ (dans laquelle $R^3$ désigne un radical alkyle ayant 1 à 6 atomes de carbone par radical)
- $OSiR^4_3$ (dans laquelle $R^4$ désigne un radical méthyle, éthyle, isopropyle, tert-butyle ou phényle)
- 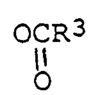

  (dans laquelle $R^3$ a la signification indiquée ci-dessus) ou
- X (dans laqulle X désigne un atome d'halogène)

ou peut être interrompu par au moins un atome d'oxygène, un atome de soufre ou un groupe carbonyle,
ou représente un radical trivalent répondant à la formule :

$\equiv P$, $\equiv P=O$ ou $\equiv SiR^5$

dans laquelle $R^5$ désigne un radical hydrocarboné monovalent ayant de 1 à 8 atomes de carbone par radical, ou représente un élément tétravalent tel que

$$\underset{|}{\overset{|}{-C-}},\quad \underset{|}{\overset{|}{-Si-}}\quad \text{ou}\quad \underset{|}{\overset{|}{-Ti-}}$$

et
x est 3, 4, 5 ou 6,
et le cas échéant
(c) par molécule au moins un motif choisi dans le groupe de motifs répondant aux formules :

$$O_{\frac{4-(c+1)}{2}}R_cSi-Q^1-SiR_cO_{\frac{4-(c+1)}{2}} \qquad (III),$$

$$O_{\frac{4-(c+1)}{2}}R_cSi-\underset{\underset{SiR_cO_{\frac{4-(c+1)}{2}}}{|}}{Q^2}-SiR_cO_{\frac{4-(c+1)}{2}} \qquad (IV)$$

$$O_{\frac{4-(c+1)}{2}}R_c\,Si-\overset{\overset{SiR_cO_{\frac{4-(c+1)}{2}}}{|}}{\underset{\underset{SiR_cO_{\frac{4-(c+1)}{2}}}{|}}{Q^3}}-SiR_cO_{\frac{4-(c+1)}{2}} \qquad (V),$$

dans lesquelles R et c ont les significations indiquées ci-dessus,
$Q^1$ désigne un radical répondant à la formule :

$$-CH_2CHR^2CHR^2O-\overset{\overset{(OCR^2=CR^2CH_3)_{x-2}}{|}}{Y}-OCHR^2CHR^2CH_2-$$

$Q^2$ désigne un radical répondant à la formule :

$$-CH_2CHR^2CHR^2O-\overset{\overset{(OCR^2=CR^2CH_3)_{x-3}}{|}}{\underset{\underset{OCHR^2CHR^2CH_2-}{|}}{Y}}-OCHR^2CHR^2CH_2- \qquad \text{et}$$

$Q^3$ désigne un radical répondant à la formule :

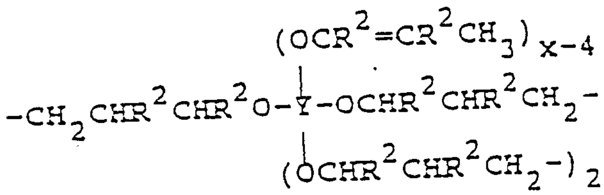

$(x-4 \geq 0)$

dans lesquelles $R^2$, Y et x ont les significations indiquées ci-dessus.

**2.** Copolymères de siloxane présentant des groupes alcényloxy selon la revendication 1, caractérisés en ce qu'ils contiennent des motifs siloxane repondant à la formule (I), par molécule, au moins un motif siloxane répondant à la formule (II), et par molécule, au moins un motif choisi parmi les motifs répondant aux formules (III), (IV) et (V).

**3.** Copolymères de siloxane présentant des groupes alcényloxy selon la revendication 1 ou 2, caractérisés en ce qu'ils contiennent

(a) des motifs siloxane répondant à la formule :

$R_2SiO$ (I')

(b) par molécule, au moins deux motifs siloxane répondant à la formule :

$QR_2SiO_{1/2}$ (II')

et

(c) par molécule, au moins un motif répondant à la formule :

$O_{1/2}R_2SiQ^1SiR_2O_{1/2}$ (III'),

dans lesquelles les symboles R, identiques ou différents, représentent des radicaux hydrocarbure éventuellement halogénés comprenant 1 à 18 atomes de carbone par radical,

Q est un radical répondant à la formule

$-CH_2CHR^2CHR^2OY(OCR^2=CR^2CH_3)_{x-1}$

$Q^1$ est un radical répondant à la formule

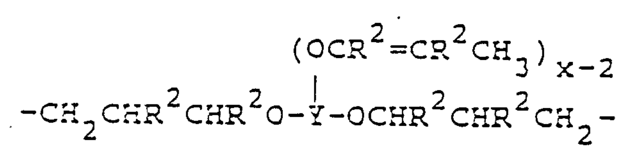

les symboles $R^2$, identiques ou différents, représentant un atome d'hydrogène ou un radical méthyle,

x est 3, 4, 5 ou 6 et

Y désigne un radical hydrocarboné trivalent, tétravalent, pentavalent ou hexavalent ayant de 2 à 20 atomes de carbone par radical ,

qui peut être substitué par des groupes répondant aux formules :

- OH
- $OR^3$ (dans laquelle $R^3$ désigne un radical alkyle ayant 1 à 6 atomes de carbone par radical)
- $OSiR^4_3$ (dans laquelle $R^4$ désigne un radical méthyle, éthyle,isopropyle, tert-butyle ou phényle)

-

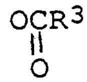

(dans laquelle $R^3$ a la signification indiquée ci-dessus) ou

- X (dans laqulle X désigne un atome d'halogène)

ou peut être interrompu par au moins un atome d'oxygène, un atome de soufre ou un groupe carbonyle,
ou représente un radical trivalent répondant à la formule :

$\equiv P$, $\equiv P=O$ ou $\equiv SiR^5$

dans laquelle $R^5$ désigne un radical hydrocarboné monovalent ayant de 1 à 8 atomes de carbone par radical, ou représente un élément tétravalent tel que

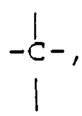 , 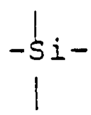 ou 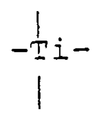

**4.** Procédé de préparation des copolymères de siloxane présentant des groupes alcényloxy selon l'une des revendications 1 à 3, caractérisé en ce que

dans une première étape :

on fait réagir un composé organique (1) présentant deux doubles liaisons aliphatiques répondant à la formule générale :

$Y(OCHR^2CR^2=CH_2)_x$ ,

dans laquelle les symboles $R^2$ sont identiques ou différents et désignent un atome d'hydrogène ou un radical méthyle,
x est 3, 4, 5 ou 6 et
Y désigne un radical hydrocarboné trivalent, tétravalent, pentavalent ou hexavalent ayant de 2 à 20 atomes de carbone par radical ,
qui peut être substitué par des groupes répondant aux formules :

- OH
- $OR^3$ (dans laquelle $R^3$ désigne un radical alkyle ayant 1 à 6 atomes de carbone par radical)
- $OSiR^4_3$ (dans laquelle $R^4$ désigne un radical méthyle, éthyle,isopropyle, tert-butyle ou phényle)
-

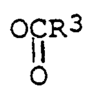

(dans laquelle $R^3$ a la signification indiquée ci-dessus) ou

- X (dans laqulle X désigne un atome d'halogène)

ou peut être interrompu par au moins un atome d'oxygène, un atome de soufre ou un groupe carbonyle,
ou représente un radical trivalent répondant à la formule :

$\equiv P$, $\equiv P=O$ ou $\equiv SiR^5$

dans laquelle $R^5$ désigne un radical hydrocarboné monovalent ayant de 1 à 8 atomes de carbone par radical, ou représente un élément tétravalent tel que

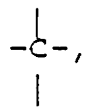, 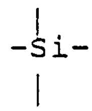 ou 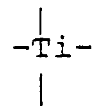

avec un polyorganosiloxane (2) ayant au moins un atome d'hydrogène lié au Si par molécule, en présence d'un catalyseur (3) favorisant la fixation d'hydrogène lié au Si sur une double liaison aliphatique, le rapport utilisé de la double liaison aliphatique présente dans le composé organique (1) à l'hydrogène lié au Si dans le polyorganosiloxane (2) étant tel que l'on obtienne des copolymères de siloxane présentant des groupes alcényle ayant en moyenne plus de deux groupes alcényle A répondant à la formule :

$-OCHR^2CR^2=CH_2$ ,

dans laquelle $R^2$ a la signification indiquée ci-dessus, puis

dans une seconde étape :

on transpose la double liaison des groupes alcényle A sur l'atome de carbone voisin de l'atome d'oxygène de l'éther par chauffage du copolymère de siloxane présentant des groupes alcényle obtenu dans la première étape, en présence d'un catalyseuer (4) favorisant une telle transposition de la double liaison, pour obtenir des copolymères de siloxane présentant des groupes alcényloxy ayant en moyenne plus de deux groupes alcényloxy B répondant à la formule

$-OCR^2=CR^2CH_3$ ,

$R^2$ ayant la signification indiquée ci-dessus.

**5.** Procédé selon la revendication 4, caractérisé en ce qu'on utilise, comme composé organique (1), un composé de formule

$(R^6OCH_2)_{4-k}C(CH_2OCH_2CH=CH_2)_k$,

dans laquelle $R^6$ représente un atome d'hydrogène ou un radical de formule

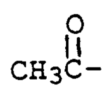

et k est en moyenne 2,5 à 3,5.

**6.** Procédé selon la revendication 4, caractérisé en ce qu'on utilise comme polyorganosiloxane (2) ayant au moins un atome d'hydrogène lié au Si par molécule, un polyorganosiloxane de formule générale

$H_dR_{3-d}SiO(SiR_2O)_o(SiRHO)_pSiR_{3-d}H_d$ (VII),

dans laquelle les radicaux R, identiques ou différents, représentent des radicaux hydrocarbonés éventuellement halogénés présentant de 1 à 18 atomes de carbone par radical,
d est 0 ou 1,
O est 0 ou un nombre entier de 1 à 1000 et
p est 0 ou un nombre entier de 1 à 6.

**7.** Utilisation des copolymères de siloxane présentant des groupes alcényloxy selon la revendication 1, 2 ou 3 dans des compositions réticulables par la lumière, à base des polyorganosiloxanes mentionnés ci-dessus.

**8.** Utilisation des copolymères de siloxane présentant des groupes alcényloxy selon la revendication 1, 2 ou 3 pour la préparation de revêtements réticulables par la lumlière.

**Revendications pour l'Etat contractant suivant : ES**

1. Procédé de préparation de copolymères de siloxane présentant des groupes alcényloxy, caractérisé en ce que

   dans une première étape :

   on fait réagir un composé organique (1) présentant deux doubles liaisons aliphatiques répondant à la formule générale :

   $Y(OCHR^2CR^2=CH_2)_x$ ,

   dans laquelle les symboles $R^2$ sont identiques ou différents et désignent un atome d'hydrogène ou un radical méthyle,
   x est 3, 4, 5 ou 6 et
   Y désigne un radical hydrocarboné trivalent, tétravalent, pentavalent ou hexavalent ayant de 2 à 20 atomes de carbone par radical ,
   qui peut être substitué par des groupes répondant aux formules :
   - OH
   - $OR^3$ (dans laquelle $R^3$ désigne un radical alkyle ayant 1 à 6 atomes de carbone par radical)
   - $OSiR^4_3$ (dans laquelle $R^4$ désigne un radical méthyle, éthyle,isopropyle, tert-butyle ou phényle)
   - 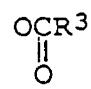

     (dans laquelle $R^3$ a la signification indiquée ci-dessus) ou
   - X (dans laqulle X désigne un atome d'halogène) ou peut être interrompu par au moins un atome d'oxygène, un atome de soufre ou un groupe carbonyle,

   ou représente un radical trivalent répondant à la formule :

   $\equiv P$, $\equiv P=O$ ou $\equiv SiR^5$

   dans laquelle $R^5$ désigne un radical hydrocarboné monovalent ayant de 1 à 8 atomes de carbone par radical, ou représente un élément tétravalent tel que

   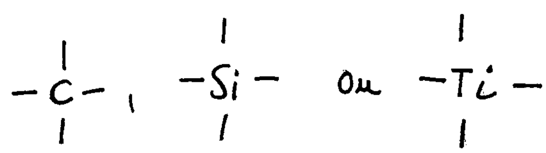

   avec un polyorganosiloxane (2) ayant au moins un atome d'hydrogène lié au Si par molécule, en présence d'un catalyseur (3) favorisant la fixation d'hydrogène lié au Si sur une double liaison aliphatique, le rapport utilisé de la double liaison aliphatique présente dans le composé organique (1) à l'hydrogène lié au Si dans le polyorganosiloxane (2) étant tel que l'on obtienne des copolymères de siloxane présentant des groupes alcényle ayant en moyenne plus de deux groupes alcényle A répondant à la formule :

   $OCHR^2CR^2=CH_2$,

   dans laquelle $R^2$ a la signification indiquée ci-dessus, puis

   dans une seconde étape :

   on transpose la double liaison des groupes alcényle A sur l'atome de carbone voisin de l'atome d'oxygène de l'éther par chauffage du copolymère de siloxane présentant des groupes alcényle obtenu dans la première étape, en présence d'un catalyseur (4) favorisant une telle transposition de la double liaison, pour obtenir des copolymères de siloxane présentant des groupes alcényloxy ayant en moyenne plus de deux groupes alcényloxy B répondant à la formule

$-OCR^2=CR^2CH_3$ ,

$R^2$ ayant la signification indiquée ci-dessus.

**2.** Procédé selon la revendication 1, caractérisé en ce qu'on utilise, comme composé organique (1), un composé de formule

$(R^6OCH_2)_{4-k}C(CH_2OCH_2CH=CH_2)_k$ ,

dans laquelle $R^6$ représente un atome d'hydrogène ou un radical de formule

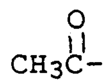

et k est en moyenne 2,5 à 3,5.

**3.** Procédé selon la revendication 1, caractérisé en ce qu'on utilise comme polyorganosiloxane (2) ayant au moins un atome d'hydrogène lié au Si par molécule, un polyorganosiloxane de formule générale

$H_dR_{3-d}SiO(SiR_2O)_o(SiRHO)_pSiR_{3-d}H_d$ (VII),

dans laquelle les radicaux R, identiques ou différents, représentent des radicaux hydrocarbonés éventuellement halogénés présentant de 1 à 18 atomes de carbone par radical,
d est 0 ou 1,
O est 0 ou un nombre entier de 1 à 1000 et
p est 0 ou un nombre entier de 1 à 6.

**4.** Utilisation de copolymères de siloxane présentant des groupes alcényloxy et qui peuvent être préparés selon la revendication 1, 2 ou 3, dans des compositions réticulables par la lumière, à base des polyorganosiloxanes mentionnés ci-dessus.

**5.** Utilisation des copolymères de siloxane présentant des groupes alcényloxy et qui peuvent être préparés selon la revendication 1, 2 ou 3, pour la préparation de revêtements réticulables par la lumière.